# EUROPÄISCHE PATENTANMELDUNG

(11) **EP 2 295 177 A1**
(43) Veröffentlichungstag der Anmeldung: **16.03.2011**
(21) Anmeldenummer: 09011536.1
(22) Anmeldetag: 09.09.2009
(51) Int. Cl.: B23D 3/02, B23D 37/04, B23D 41/04

(54) **Werkzeugaggregat und Nutenziehmaschine zum Herstellen von Nuten oder Vertiefungen**

(71) Anmelder: Maschinenfabrik Frömag GmbH & Co. Kg, 58730 Fröndenberg/Ruhr (DE)
(72) Erfinder: Neustadt, Dieter, Dipl.-Ing., 50226 Frechen (DE)
(74) Vertreter: von dem Borne, Andreas

(57) **Zusammenfassung**

Werkzeugaggregat (1) zum Herstellen von Nuten oder dergleichen Vertiefungen in oder an einem Werkstück (W), insbesondere für eine Nutenziehmaschine,
mit zumindest einem periodisch auf- und abbewegbaren Messerhalter (2), an dem zumindest ein Messer (3) befestigt oder befestigbar ist,
und zumindest einer gemeinsam mit dem Messerhalter auf- und abbewegbaren Vorschubstange (5), welche zumindest einen Vorschubkeil (6) aufweist, der gegen eine dem Vorschubkeil zugeordnete Vorschubkante (7) des Messerhalters arbeitet,
dadurch gekennzeichnet,
dass die Vorschubstange mehrere untereinander angeordnete Vorschubkeile aufweist und
dass der Messerhalter mehrere untereinander angeordnete Vorschubkanten aufweist,
wobei jeweils ein Vorschubkeil der Vorschubstange auf eine dem Vorschubkeil zugeordnete Vorschubkante des Messerhalters arbeitet.

## Beschreibung

Die Erfindung betrifft ein Werkzeugaggregat zum Herstellen von Nuten oder dergleichen Vertiefungen in oder an einem Werkstück, insbesondere für eine Nutenziehmaschine, mit zumindest einem periodisch auf- und abbewegbaren Messerhalter, an dem zumindest ein Messer befestigt oder befestigbar ist und zumindest einer gemeinsam mit dem Messerhalter auf- und abbewegbaren Vorschubstange, welche zumindest einen Vorschubkeil aufweist, der gegen eine dem Vorschubkeil zugeordnete Vorschubkante des Messerhalters arbeitet.

Ein solches Werkzeugaggregat ist insbesondere für eine Nutenziehmaschine bestimmt bzw. in eine solche Nutenziehmaschine integriert. In einer solchen Nutenziehmaschine führt der Messerhalter periodische Bewegungen aus, um mit dem an dem Messerhalter befestigten Messer die Nut, zum Beispiel Keilnut, in das Werkstück einzubringen. Mit Hilfe der Vorschubstange wird der Vorschub von Hub zu Hub vergrößert, sodass sich die Tiefe der Nut von Hub zu Hub erhöht.

Ein derartiges Werkzeugaggregat für eine Nutenziehmaschine ist beispielsweise aus der DE 1 146 327 bekannt. An dem Messerhalter ist ein Messer befestigt.

Ein vergleichbares Werkzeug bzw. Werkzeugaggregat für eine Nutenziehmaschine kennt man im Übrigen aus der DE 32 40 243. Dabei kann das Ziehmesser mehrteilig ausgebildet sein und zwei Einzelschneiden aufweisen, welche untereinander angeordnet sind. Es besteht folglich grundsätzlich das Bedürfnis, die Produktivität eines solchen Werkzeuges bzw. einer solchen Nutenziehmaschine zu erhöhen, indem mit einem Messerhalter mit mehr als einem Messer gearbeitet wird. Problematisch ist in diesem Zusammenhang, dass bei einer Messerstange mit mehreren untereinander angeordneten Messern der Vorschub nicht in befriedigender Art und Weise realisierbar ist. Denn bei den bekannten Werkzeugaggregaten der eingangs beschriebenen Art führt die Verschiebung der Vorschubstange in Längsrichtung zu einer Verkippung bzw. zu einer Drehung des Messerhalters um einen bestimmten Drehpunkt. Dieses führt dazu, dass der Vorschub für die einzelnen Messerschneiden ungleich ist, das heißt der Vorschub ist für ein solches Messer, welches weit entfernt vom Drehpunkt liegt, höher als für ein Messer, welches dem Drehpunkt näher ist. Die Einsatzmöglichkeiten für Messerhalter mit einer Mehrzahl von Messern sind daher begrenzt.

Wird demgegenüber mit einem Messerhalter mit lediglich einem oder auch lediglich zwei Messern gearbeitet, so reicht die Produktivität häufig nicht aus, da für eine bestimmte Nuttiefe eine Vielzahl von Arbeitshüben vorgenommen werden muss. Dieses führt zugleich zu verhältnismäßig kleinen Standzeiten des Messers sowie langen Bearbeitungszeiten durch eine Mehrzahl von Arbeits-und Rückhüben.

Im Übrigen kennt man das Einbringen von Nuten oder dergleichen im Wege des Stoßräumens mit Hilfe einer Räumnadel, wobei eine solche Räumnadel eine Vielzahl von untereinander angeordneten Räumzähnen und folglich Messerschneiden aufweist, welche von einem Ende der Räumnadel zum anderen Ende der Räumnadel mit zunehmender Tiefe in das Werkstück eingreifen, sodass eine Nut häufig mit einem einzigen Arbeitshub eingebracht werden kann. Eine derartige Räumnadel ist beispielsweise aus der DE 43 30 529 C2 bekannt. Die Einsatzmöglichkeiten sind jedoch ebenfalls begrenzt.

Aus der AT 89 102 ist ferner eine Maschine zur Herstellung von Keilnuten mit einem am vorderen Ende eines Gehäuses befestigten Einsteckzapfen bekannt, welcher zwei Druckkegel zum Festspannen und Festhalten der Maschine nach erfolgtem Einführen des Einsteckzapfens in die Bohrung des zu nutenden Gegenstandes aufweist. In dem Einsteckzapfen ist ein Werkzeughalter mit dem Werkzeug sowohl längs- als auch auf und nieder beweglich gelagert, dessen Antriebsvorrichtung in einem in dem Außengehäuse geführten, auf und nieder beweglichen Innengehäuse angeordnet ist, für welches eine in dem Außengehäuse verschiebbare Hubvorrichtung angeordnet ist. Die Hubvorrichtung ist mit einer zweiten, in dem Einsteckzapfen verschiebbar angeordneten Hubvorrichtung für den Werkzeughalter verbunden, wodurch sowohl das Innengehäuse als auch der Werkzeughalter entsprechend dem fortschreitenden Einarbeiten der Nut gehoben werden kann. An dem Innengehäuse ist seitlich ein Umschaltgehäuse befestigt und mit einem Kurbelhalter mit Kurbel verbunden, bei deren Andrehen in dem einen oder anderen Sinne die Kurbelwelle mit ihrem Kupplungsstück in der einen oder anderen Richtung verschoben und dadurch die mehrfache Übersetzung oder der unmittelbare Antrieb eingeschaltet wird.

Schließlich beschreibt die DE 42 41 208 C2 ein Werkzeug zum Herstellen einer Längsnut an einem Werkstück mit einer Werkzeughülse, welche einen Längsschlitz aufweist, dessen Breite an diejenige der Längsnut angepasst ist und mit einem langgestreckten, wenigstens eine an die Breite der Längsnut angepasste Schneide tragenden Schneidenteil, welches in den Längsschlitz eingepasst, in seitlicher Richtung von diesem geführt und unter Abstützung gegen die Schnittkräfte in die Werkzeughülse eingelassen ist und betriebsmäßig einen reversierenden Längshub ausführt. Dabei sind eine das Schneidenteil bildende Räumnadel sowie Zustellmittel vorgesehen, welche an einer ins Innere der Werkzeughülse weisende Längsseite der Räumnadel angreifen, einen mit der Werkzeughülse fluchtenden Einspannschaft aufweisen und eine Zustellbewegung bei einer gegenüber der Werkzeughülse erfolgenden relativen Drehung des Einspannschaftes um dessen Rotationsachse ausführen.

Der Erfindung liegt die Aufgabe zugrunde, ein Werkzeugaggregat, insbesondere für eine Nutzenziehmaschine zu schaffen, welches die Herstellung von Nuten oder dergleichen Vertiefungen mit hoher Produktivität und hoher Werkzeugstandzeit bei gleichzeitig universeller Einsatzmöglichkeit gewährleistet.

Zur Lösung dieser Aufgabe lehrt die Erfindung bei einem gattungsgemäßen Werkzeugaggregat, insbesondere für eine Nutenziehmaschine, der eingangs beschriebenen Art, dass die Vorschubstange mehrere untereinander angeordnete Vorschubkeile aufweist und dass der Messerhalter mehrere untereinander angeordnete Vorschubkanten aufweist, wobei jeweils ein Vorschubkeil der Vorschubstange auf eine dem Vorschubkeil zugeordnete Vorschubkante arbeitet. Die Vorschubstange weist folglich zumindest zwei Vorschubkeile auf, während der Messerhalter dementsprechend zumindest zwei Vorschubkanten aufweist, wobei diese beiden Vorschubkeile einerseits und die Vorschubkanten andererseits jeweils um ein vorgegebenes Maß beabstandet angeordnet sein können. Vorzugsweise sind jedoch mehr als zwei Vorschubkeile und auch mehr als zwei Vorschubkanten vorgesehen, zum Beispiel drei bis zehn, besonders bevorzugt vier bis acht Vorschubkanten bzw. Vorschubkeile. Es ist folglich zweckmäßig, wenn die Vorschubstange mehrere sägezahnartig untereinander angeordnete Vorschubkeile aufweist, während der Messerhalter, zum Beispiel rückseitig, mehrere sägezahnartig untereinander angeordnete Vorschubkanten aufweist. Vorzugsweise weist der Messerhalter mehrere untereinander angeordnete Messer mit jeweils einer oder mehreren Schneiden auf oder der Messerhalter weist zumindest ein Messer mit mehreren untereinander angeordneten Schneiden auf. Insofern ist bevorzugt ein Messer nach Art einer Räumnadel an dem Messerhalter befestigt.

Dabei geht die Erfindung zunächst einmal von der Erkenntnis aus, dass sich die Produktivität und auch die Messerstandzeit eines Werkzeuges erheblich erhöhen lässt, wenn mit einer Vielzahl von Messerschneiden gearbeitet wird, so wie dieses beispielsweise im Falle einer Räumnadel der Fall ist. Der einwandfreie Einsatz eines solchen Messers wird im Rahmen der Erfindung nun dadurch möglich, dass durch die Mehrzahl von Vorschubkeilen und die korrespondierenden Vorschubkanten dafür gesorgt wird, dass der Messerhalter im Zuge des Vorschubes über im Wesentlichen seine gesamte Länge um im Wesentlichen dasselbe Vorschubmaß verschoben wird. Dabei ist es in an sich bekannter Weise einfach möglich, den Vorschub durch Längsverschiebung der Vorschubstange zu realisieren. Diese Längsverschiebung der Vorschubstange führt nun jedoch nicht zu einem Verkippen bzw. Verdrehen des Messerhalters, sondern es erfolgt eine "echte" Verschiebung des gesamten Messerhalters in Vorschubrichtung und folglich quer zu der Längsbewegung der Vorschubstange. Gegenüber den herkömmlichen Stoßräumwerkzeugen zeichnet sich die Erfindung insbesondere dadurch aus, dass mit dem Werkzeugaggregat periodisch hintereinander mehrere Hübe vorgenommen werden können, sodass bei vorgegebener Nuttiefe und Nutlänge bzw. Nutgeometrie mit verhältnismäßig kleinen und folglich kostengünstigen Werkzeugen gearbeitet werden kann. Gegenüber den herkömmlichen Werkzeugen für Nutenziehmaschinen zeichnet sich die Erfindung insbesondere durch hohe Produktivität und hohe Werkzeugstandzeit aus, da - wie erläutert - nicht lediglich mit einem Nutmesser gearbeitet wird. Die Bearbeitungszeit wird deutlich verkürzt. Bei alledem lässt sich das erfindungsgemäße Werkzeugaggregat universell einsetzen.

Nach einem weiteren Vorschlag der Erfindung sind der Messerhalter und die Vorschubstange an einer Führungsstange befestigt, wobei diese Führungsstange im Rahmen der Erfindung gemeinsam mit dem Messerhalter und der Vorschubstange auf- und abbewegbar ist. Während bei herkömmlichen Nutenziehmaschinen der Messerhalter und die Vorschubstange üblicherweise in einer Fühnrngsrinne der fest angeordneten Führungsstange auf- und abbewegt werden, schlägt die Erfindung vorzugsweise ein selbstführendes Werkzeugaggregat vor, das heißt, das gesamte Werkzeugaggregat bestehend aus Führungsstange, Messerhalter und Vorschubstange, bewegt sich periodisch auf und ab. Der Messerhalter wird folglich nicht in Längsrichtung relativ zu der Führungsstange bewegt, sondern der Messerhalter wird lediglich während des Vorschubs quer zur Längsrichtung des Messerhalters verschoben. Dazu wird die Vorschubstange verschoben. Dabei wird die Vorschubstange in an sich bekannter Weise entlang der Messerlängsrichtung verschoben, und zwar in der Regel nachdem ein Arbeitshub vollzogen worden ist. Während der periodischen Arbeitshübe ruht die Vorschubstange bezogen auf den Messerhalter und die Führungsstange, das heißt sie wird während der Arbeitshübe gemeinsam mit dem Messerhalter und der Führungsstange auf- und abbewegt.

Besonders bevorzugt wird ein solches Werkzeugaggregat tatsächlich in vertikaler Richtung auf- und abbewegt. In diesem Fall sind die Messerschneiden einerseits und auch die Vorschubkeile und Vorschubkanten andererseits tatsächlich untereinander bzw. übereinander angeordnet. Die Erfindung umfasst jedoch auch Ausführungsformen, bei welchen das Werkzeugaggregat in horizontaler Richtung oder auch "schräg" betätigt wird. In diesem Fall sind die Messerschneiden einerseits und Vorschubkeile und Vorschubkanten andererseits nicht stets exakt untereinander bzw. übereinander angeordnet, sondern ggf. hintereinander bzw. nebeneinander. Auch derartige Ausführungsformen werden von der Erfindung umfasst.

Durch besonders einfachen Aufbau und hervorragende Funktionsweise zeichnet sich eine bevorzugte Ausführungsform der Erfindung aus, bei welcher der Messerhalter unter Zwischenschaltung der Vorschubstange gegen die Führungsstange verspannt ist, zum Beispiel mittels einer oder mehrerer Spannfedern. Dazu kann die Führungsstange eine Aufnahme, zum Beispiel rinnenförmige Aufnahme aufweisen, in welche einerseits die Vorschubstange und andererseits der Messerhalter eingesetzt sind. Die Vorschubstange ist nun zwischen dem Messerhalter einerseits und dem Grund dieser rinnenförmigen Aufnahme angeordnet und mit Hilfe zum Beispiel der Spannfedern gegen den Grund dieser rinnenförmigen Aufnahme gespannt. Im Zuge der Betätigung der Vorschubstange in Längsrichtung wird der Messerhalter gegen die Kraft der Spannfedem vorgeschoben.

Weiter schlägt die Erfindung vor, dass die Führungsstange in einer zum Beispiel an einem Maschinengestell befestigten Führungsbuchse geführt ist. Denn wie bereits erläutert ist es im Rahmen der Erfindung zweckmäßig, wenn das Werkzeugaggregat selbstführend ausgebildet ist, das heißt das gesamte Werkzeugaggregat einschließlich der Führungsstange wird während der Nutenherstellung auf- und abbewegt, und zwar vorzugsweise in einer Führungsbuchse, welche zum Beispiel eine (zentrale) Durchbrechung als Lager bzw. Führung aufweisen kann. Die Führungsbuchse kann dabei ein Gleitlager bilden. Es können jedoch auch Wälzlager oder andere Lagerarten verwirklicht sein.

Ferner besteht die Möglichkeit, dass die Führungsbuchse selbst zugleich eine Werkstückaufnahme bildet, das heißt das zu bearbeitende Werkstück wird an der Führungsbuchse befestigt und folglich von der Führungsbuchse aufgenommen. Die Erfindung umfasst jedoch auch Ausführungsformen, bei denen einerseits eine Führungsbuchse und andererseits eine Werkstückaufnahme als separate Bauteile vorgesehen sind, wobei die Werkstückaufnahme beispielsweise an bzw. auf der Führungsbuchse befestigt sein kann.

Ferner schlägt die Erfindung vor, dass die Führungsstange, zum Beispiel in ihrem unteren Endbereich, einen Befestigungsabschnitt aufweist, sodass die Führungsstange mit Hilfe dieses Befestigungsabschnittes an zum Beispiel einem Hubschlitten oder dergleichen einer Nutenziehmaschine oder dergleichen befestigt werden kann. Vorzugsweise ragt die Vorschubstange mit ihrem den Vorschubkeilen abgewandten Ende aus der Führungsstange heraus, wobei in diesem Bereich der Vorschubstange ein Befestigungsabschnitt vorgesehen ist, mit welchem die Vorschubstange an einem Vorschubschlitten bzw. einem Vorschubantrieb anschließbar ist.

Die Erfindung betrifft femer eine Nutenziehmaschine zum Herstellen von Nuten oder dergleichen Vertiefungen in oder an einem Werkstück, mit einem Werkzeugaggregat der beschriebenen Art. Eine solche Nutenziehmaschine weist in an sich bekannter Weise darüber hinaus zumindest ein Maschinengestell, einen Hubantrieb, mit welchem das Werkzeugaggregat auf- und abbewegbar ist, sowie einen Vorschubantrieb auf, welcher auf die Vorschubstange des Werkzeugaggregates arbeitet. Einzelheiten im Zusammenhang mit einer solchen Nutenziehmaschine ergeben sich aus der Figurenbeschreibung.

Im Folgenden wird die Erfindung anhand einer lediglich ein Ausführungsbeispiel darstellenden Zeichnung näher erläutert. Es zeigen
- Fig. 1: ein erfindungsgemäßes Werkzeugaggregat in einem Horizontal- schnitt,
- Fig. 2: eine abgewandelte Ausführungsform des Gegenstandes nach Fig. 1,
- Fig. 3: den Gegenstand nach Fig. 2 in einer vereinfachten perspektivischen Darstellung und
- Fig.4: schematisch und vereinfacht eine Nutenziehmaschine in einer Seitenansicht mit einem erfindungsgemäßen Werkzeugaggregat.

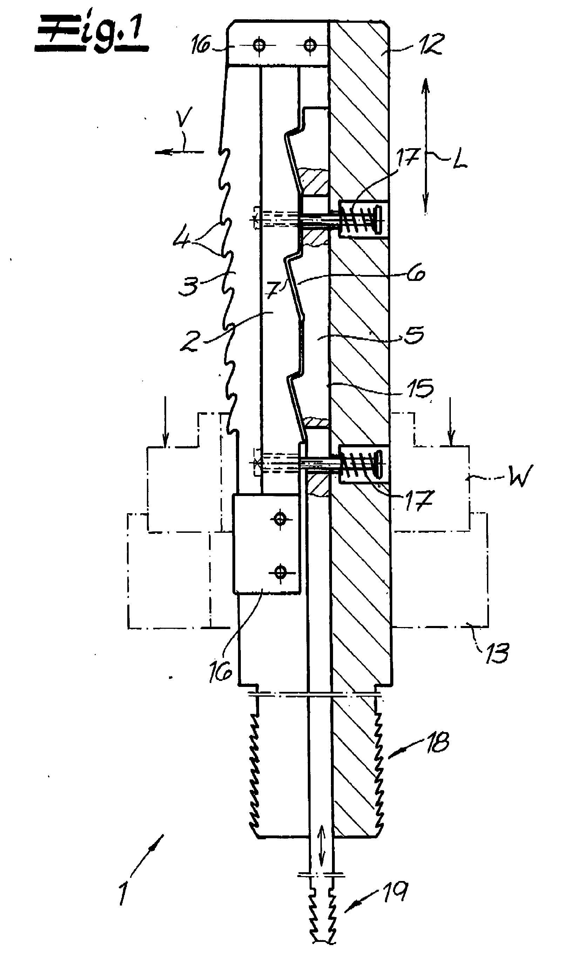

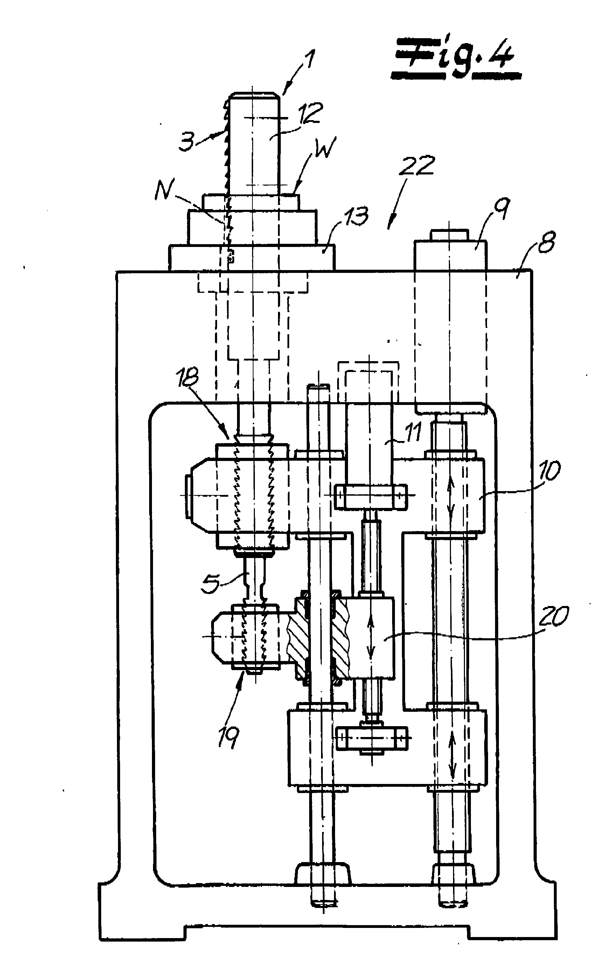

In den Figuren ist ein Werkzeugaggregat 1 für eine Nutenziehmaschine 22 dargestellt. Das Werkzeugaggregat 1 selbst ist insbesondere in den Figuren 1 bis 3 erkennbar, während die Nutenziehmaschine 22 mit einem solchen Werkzeugaggregat 1 in Fig. 4 angedeutet ist.

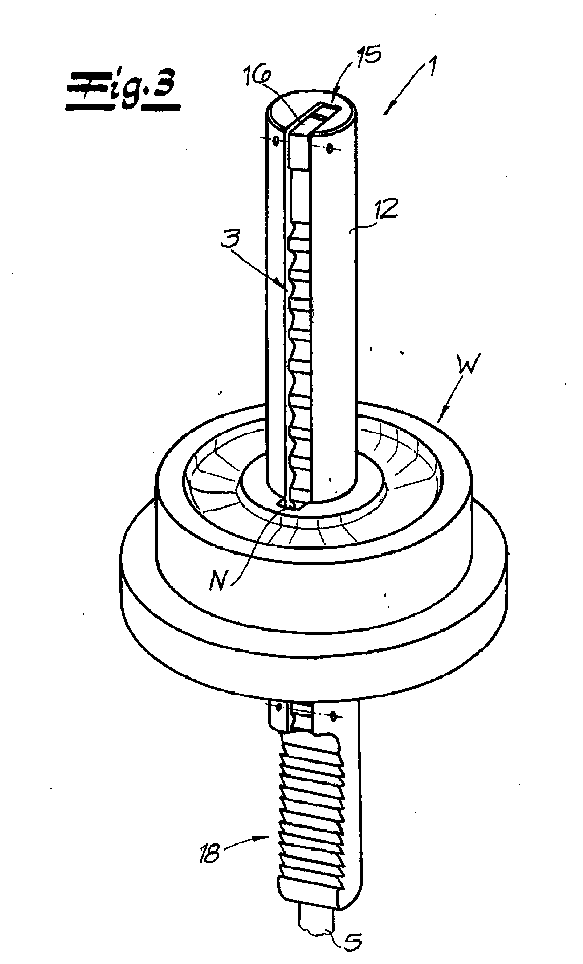

Das Werkzeugaggregat 1 weist einen periodisch auf- und abbewegbaren Messerhalter 2 auf, an dem ein Messer 3 befestigt ist, wobei dieses Messer nach Art einer Räumnadel eine Vielzahl von untereinander angeordneten Messerschneiden 4 aufweist. Die einzelnen Messerschneiden 4 bzw. Zähne dieses Messers 3 stehen unterschiedlich weit vor. Im Ausführungsbeispiel wächst der "Vorstand" der einzelnen Messerschneiden 4 von unten nach oben. Die beispielsweise in Fig. 3 angedeutete Nut N wird folglich im Zuge der Abwärtsbewegung des Messerhalters 2 und folglich im Zuge der Abwärtsbewegung des Messers 3 in das Werkstück W eingebracht. Nach einem solchen Abwärtshub wird der Messerhalter 2 wieder aufwärtsbewegt. Anschließend wird der Vorschub erhöht und es erfolgt eine erneute Abwärtsbewegung, sodass die Nuttiefe weiter vergrößert wird. Dazu weist das Werkzeugaggregat 1 in an sich bekannter Weise eine mit dem Messerhalter 2 gemeinsam auf- und abbewegbare Vorschubstange 5 auf, welche zumindest einen Vorschubkeil 6 aufweist, der gegen eine dem Vorschubkeil 6 zugeordnete Vorschubkante 7 des Messerhalters 2 arbeitet. Die Vorschubstange 5 wird folglich von Hub zu Hub stets etwas mehr entlang der Längsrichtung L verschoben, sodass sich durch Zusammenwirken von Vorschubkeil 6 einerseits und Vorschubkante 7 andererseits der Vorschub in Richtung V erhöht.

Erfindungsgemäß weist die Vorschubstange 5 nun nicht nur lediglich einen einzigen Vorschubkeil, sondern eine Vielzahl von Vorschubkeilen 6 auf, welche sägezahnartig untereinander angeordnet sind. Der Messerhalter 2 weist ebenfalls mehrere Vorschubkanten 7 auf, welche ebenfalls sägezahnartig untereinander angeordnet sind. Dabei arbeitet jeweils ein Vorschubkeil 6 der Vorschubstange 5 auf eine korrespondierende Vorschubkante 7 des Messerhalters 2. Dieses führt dazu, dass im Zuge des Verschiebens der Vorschubstange 5 in Längsrichtung L der Messerhalter 2 nun nicht wie beim Stand der Technik verkippt bzw. verdreht wird, sondern tatsächlich im Wesentlichen über die gesamte Länge um im Wesentlichen dasselbe Vorschubmaß verschoben wird, und zwar entlang der Vorschubrichtung (Pfeil V).

Dazu wird ein solches Werkzeugaggregat 1 beispielsweise in eine Nutenziehmaschine 2 gemäß Figur 4 integriert. Diese Nutenziehmaschine 22 weist ein Maschinengestell 8 auf, an welchem ein erster Antrieb 9 als Hubantrieb 9 befestigt ist. Mit diesem Hubantrieb 9 lässt sich ein Hubschlitten 10 auf- und abbewegen, wobei dieser Hubschlitten 10 mit dem Werkzeugaggregat 1 und folglich auch mit dem Messerhalter 2 verbunden ist. An dem Hubschlitten 10 selbst ist wiederum ein zweiter Antrieb 11, nämlich der Vorschubantrieb 11 befestigt, das heißt der gesamte Vorschubantrieb 11 wird im Ausführungsbeispiel mit dem Hubschlitten 10 auf- und abbewegt. Der Vorschubantrieb 11 arbeitet nun auf die Vorschubstange 5, sodass der Vorschub V von Hub zu Hub durch geringfügiges Verschieben der Vorschubstange 5 in Längsrichtung L mit Hilfe des Vorschubantriebes 11 vergrößert werden kann.

Erfindungsgemäß weist die Vorschubstange 5 nun nicht lediglich einen einzigen Vorschubkeil auf, sondern mehrere Vorschubkeile 6. Diese mehreren Vorschubkeile 6 sind im Ausführungsbeispiel sägezahnartig untereinander angeordnet. Der Messerhalter 2 weist auf seiner der Vorschubstange 5 zugeordneten Rückseite mehrere Vorschubkanten 7 auf. Auch dort sind mehrere Vorschubkanten 7 sägezahnartig untereinander angeordnet, sodass jeder Vorschubkeil 6 der Vorschubstange 5 auf eine Vorschubkante 7 des Messerhalters 2 arbeitet. Wird nun die Vorschubstange 5, die auch als Vorschubleiste bezeichnet werden kann, entlang der Längsrichtung L verschoben, so wird durch das Zusammenwirken von Vorschubkeilen 6 einerseits und Vorschubkanten 7 andererseits der Messerhalter und mit diesem auch das Messer in der orthogonal zur Längsrichtung L verlaufenden Vorschubrichtung V verschoben. Dabei kommt es nicht zu einem Verkippen bzw. einer Verdrehung des Messerhalters, sondern der Messerhalter 2 wird tatsächlich über im Wesentlichen seine gesamte Länge um ein im Wesentlichen konstantes Vorschubmaß verschoben. Dieses führt dazu, dass trotz der Verwendung eines Messers 3 im Sinne einer Räumnadel mit einer Vielzahl von Messerschneiden 4 ein einwandfreier Vorschub realisiert wird, und zwar für sämtliche Messerschneiden 4.

Im Ausführungsbeispiel sind der Messerhalter 2 einerseits und die Vorschubstange 5 andererseits an einer Führungsstange 12 befestigt, wobei diese Führungsstange 12 gemeinsam mit dem Messerhalter 2 und der Vorschubstange 5 als "einheitliches" Werkzeugaggregat auf und abbewegbar ist. Dazu ist die Führungsstange 12 in einer Führungsbuchse 13 geführt, welche an dem Maschinengestell 8 befestigt ist. Diese Führungsbuchse 13 bildet im Ausführungsbeispiel zugleich die Werkstückaufnahme, das heißt das zu bearbeitende Werkstück W ist an dieser Führungsbuchse 13 befestigt, und zwar beispielsweise mit Hilfe einer lediglich angedeuteten Klemmvorrichtung 14.

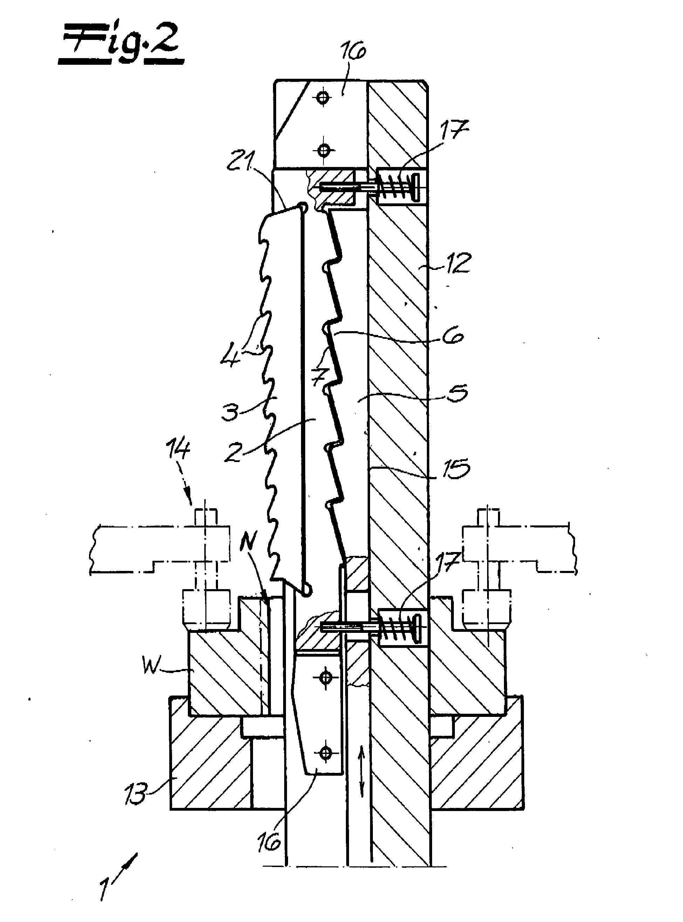

Die Führungsstange 12 selbst weist als Aufnahme für den Messerhalter 2 und die Vorschubstange 5 eine rinnenförmige Ausnehmung 15 auf. In dieser rinnenförmigen Aufnahme 15 wird der Messerhalter 2 befestigt, und zwar mit Hilfe einer oder mehrerer Begrenzungsleisten 16 bzw. Anschläge. In den Fig. 1 und 2 ist erkennbar, dass der Messerhalter 2 unter Zwischenschaltung der Vorschubstange 5 gegen die Führungsstange 12 bzw. gegen den Boden der rinnenförmigen Aufnahme 15 verspannt ist. Dazu sind mehrere Spannfedern 17 vorgesehen, welche den Messerhalter 2 unter Zwischenschaltung der Vorschubstange 5 gegen die Führungsstange 12 verspannen.

An ihrem unteren Ende weist die Führungsstange 12 einen Befestigungsabschnitt 18 auf. Eine vergleichende Betrachtung der Fig. 3 und 4 macht deutlich, dass die Führungsstange 12 mit diesem Befestigungsabschnitt 18 an dem Hubschlitten 10 fixiert wird, welcher wiederum von dem Hubantrieb 9 beaufschlagt wird. Folglich lässt sich mit Hilfe des Hubantriebes 9 der Hubschlitten 10 und damit die Führungsstange 12 und folglich das gesamte Werkstückaggregat 1 auf- und abbewegen.

Die Vorschubstange 5 ragt endseitig und folglich unterseitig um ein vorgegebenes Maß aus der Führungsstange 12 vor. Dieses ergibt sich beispielsweise aus Figur 1. Eine vergleichende Betrachtung der Fig. 1 und 4 macht nun deutlich, dass auch die Vorschubstange 5 einen endseitigen Befestigungsabschnitt 19 aufweist, mit welchem die Vorschubstange 5 an den Vorschubschlitten 20 angeschlossen wird. Dieser Vorschubschlitten 20 wird - wie bereits beschrieben - mit dem Vorschubantrieb 11 verschoben, um den Vorschub von Hub zu Hub etwas zu vergrößern.

Durch die erfindungsgemäße Ausgestaltung lassen sich nun mit hoher Produktivität Nuten N in das Werkstück W einbringen, da mit einem Messer 3 mit einer Vielzahl von Messerschneiden 4 gearbeitet werden kann, ohne dass sich die bekannten Probleme im Zuge der Vorschubs ergeben.

Die Fig. 1 und 2 zeigen dabei unterschiedliche Ausführungsformen, wobei gemäß Figur 1 drei Vorschubkeile 6 und drei korrespondierende Vorschubkanten 7 vorgegeben sind, während bei Figur 2 sechs Vorschubkeile 6 und sechs korrespondierende Vorschubkanten 7 vorgesehen sind. Interessant ist, dass der Messerhalter 2 eine Aufnahme 21 aufweisen kann, in welche ggf. ein herkömmliches handelsübliches Messer, zum Beispiel eine Räumnadel eingesetzt werden kann.

## Patentansprüche

1. Werkzeugaggregat (1) zum Herstellen von Nuten (N) oder dergleichen Vertiefungen in oder an einem Werkstück (W), insbesondere für eine Nutenziehmaschine (22),
mit zumindest einem periodisch auf- und abbewegbaren Messerhalter (2), an dem zumindest ein Messer (3) befestigt oder befestigbar ist,
und zumindest einer gemeinsam mit dem Messerhalter (2) auf- und abbewegbaren Vorschubstange (5), welche zumindest einen Vorschubkeil (6) aufweist, der gegen eine dem Vorschubkeil (5) zugeordnete Vorschubkante (7) des Messerhalters (2) arbeitet, **dadurch gekennzeichnet,**
**dass** die Vorschubstange (5) mehrere untereinander angeordnete Vorschubkeile (6) aufweist und
**dass** der Messerhalter (2) mehrere untereinander angeordnete Vorschubkanten (7) aufweist,
wobei jeweils ein Vorschubkeil (6) der Vorschubstange (5) auf eine dem Vorschubkeil (6) zugeordnete Vorschubkante (7) des Messerhalters (2) arbeitet.

2. Werkzeugaggregat nach Anspruch 1, **dadurch gekennzeichnet, dass** die Vorschubstange (5) mehrere sägezahnartig untereinander angeordnete Vorschubkeile (6) aufweist.

3. Werkzeugaggregat nach Anspruch 1 oder 2, **dadurch gekennzeichnet, dass** der Messerhalter (2), zum Beispiel rückseitig, mehrere sägezahnartig untereinander angeordnete Vorschubkanten (7) aufweist.

4. Werkzeugaggregat nach einem der Ansprüche 1 bis 3, **dadurch gekennzeichnet, dass** der Messerhalter (2) mehrere untereinander angeordnete Messer (3) mit jeweils einer oder mehreren Schneiden (4) trägt oder dass der Messerhalter (L) zumindest ein Messer (3) mit mehreren untereinander angeordneten Schneiden (4) trägt.

5. Werkzeugaggregat nach einem der Ansprüche 1 bis 4, **dadurch gekennzeichnet, dass** der Messerhalter (2) und die Vorschubstange (5) an einer Führungsstange (12) befestigt sind, welche gemeinsam mit dem Messerhalter (2) und der Vorschubstange (5) auf- und abbewegbar ist.

6. Werkzeugaggregat nach Anspruch 5, **dadurch gekennzeichnet, dass** der Messerhalter (2) unter Zwischenschaltung der Vorschubstange (5) gegen die Führungsstange (12) verspannt ist, zum Beispiel mittels einer oder mehrerer Spannfedem (17).

7. Werkzeugaggregat nach Anspruch 5 oder 6, **dadurch gekennzeichnet, dass** die Führungsstange (12) in einer zum Beispiel an einem Maschinengestell (8) befestigbaren Führungsbuchse (13) geführt ist.

8. Werkzeugaggregat nach Anspruch 7, **dadurch gekennzeichnet, dass** die Führungsbuchse (13) von einer Werkstückaufnahme gebildet wird oder mit einer Werkstückaufnahme verbunden ist.

9. Werkzeugaggregat nach einem der Ansprüche 5 bis 8, **dadurch gekennzeichnet, dass** die Führungsstange (12) zum Beispiel in ihrem unteren Endbereich einen Befestigungsabschnitt (18) aufweist, welcher an einen Hubschlitten (10) oder dergleichen einer Nutenziehmaschine (22) anschließbar ist.

10. Werkzeugaggregat nach einem der Ansprüche 5 bis 9, **dadurch gekennzeichnet, dass** die Vorschubstange (5) endseitig aus der Führungsstange (12) herausragt und einen Befestigungsabschnitt (19) aufweist, welcher an einen Vorschubschlitten (20) oder dergleichen einer Nutenziehmaschine (22) anschließbar ist.

11. Nutenziehmaschine (22) zum Herstellen von Nuten (N), oder dergleichen Vertiefungen in oder an einem Werkstück (W), mit zumindest einem Werkzeugaggregat (1) nach einem der Ansprüche 1 bis 10, sowie mit einem Maschinengestell (8), einem Hubantrieb (9), mit weichem das Werkzeugaggregat (1) aufund abbewegbar ist, und einem Vorschubantrieb (11), welcher auf die Vorschubstange (5) des Werkzeugaggregates (1) arbeitet.
